# EUROPEAN PATENT APPLICATION

(11) **EP 4 332 867 A1**
(43) Date of publication of application: **06.03.2024**
(21) Application number: 23189116.9
(22) Date of filing: 02.08.2023
(51) Int. Cl.: G06Q 30/0251, G06Q 30/0207

(54) **A COMPUTER IMPLEMENTED METHOD OF DETERMINING GAME PLAYER PREDILECTION**

(30) Priority: 02.09.2022 AU 2022902528
(71) Applicant: Onlife Inc., Dover, DE 19901 (US)
(72) Inventor: BATT, Owen, Kalorama, VIC 3766 (AU); SATGUNASINGAM, Darma, Camberwell, VIC 3124 (AU)
(74) Representative: Torner, Juncosa I Associats, SL

(57) **Abstract**

According to one aspect of the invention there is a computer implemented method of collecting and processing electronic information concerning a human game player, comprising. The method comprising (a) electronically monitoring a human game player's activity in the course of computerised gameplay to determine game preferences of the player. It also comprises (b) generating electronic data indicative of the game preferences (game data), and further comprises (c) computer processing the game data to determine what messages to target at the player (targeted messages) in gameplay and/or in real life commensurate with their game preferences (and preferably sending such messages to the player).

## Description

### Field of the Invention

A preferred form of the invention relates to a method of monitoring game player activity while they are engaged in a computer game and, optionally, also monitoring activity of the player in the real world, to estimate the player's predilections for the purpose of sending targeted advertising to them.

### Background

As people increasingly utilize electronic environments for a variety of purposes, it is useful to track this activity to gain information about their predilections for the purpose of sending them targeted advertising or other content.

It is for example known to monitor the online purchasing behaviour of people at retail websites to develop a profile as to the sorts of products they are attracted to and, based on those preferences, to target each person with advertisements for those products. However, because profiling consumers in this way is common to many retailers, it provides a limited point of business difference-advantage.

It is also known to determine the interests of people by monitoring their behaviour on various websites and social media platforms. This is done by tracking key words entered by the people, or the content accessed by them. However, profiling consumers in this way is limited as it may only account for information that the user specifically searches for. Further, there is typically little or no context provided for the information gathered. For example, a user might search for and purchase tickets to a concert for their mother-in-law which might be very different to the concert tickets a user would purchase for themself.

Computer gaming provides an avenue to track a person's purchasing behaviour and personal preferences. The concept of product placement or targeted advertising in computer games has been in existence for some time. In such a system, the computer game may be connected to the internet and during the game advertising content is displayed to the player. However there is no attempt to do this on the basis of player predilections learned by the player's in-game behaviour.

The success of marketing in computer games often depends on being able to accurately identify the target audience. This is currently determined by the type of computer game and the demographic profile that the player sets up at the installation of the game. For example, a player may be asked to fill in some information to set up a profile or avatar, and this information can be used to create a demographic profile of the player for targeted advertising. However this type of advertising is limited to the information that the player directly contributes to the game at set-up and on `gamer honesty' at the time. For example there is nothing to prevent a 40-year old male gamer from identifying himself as a 16-year old male gamer.

It is desirable for advertisers and promoters of goods and services to gather as much detailed and accurate information as possible about their target audience to deliver targeted content. The inventors have determined that it would be advantageous to provide a method of monitoring game player behaviour based on gamer activity (e.g. responses) made by the gamer while engaged in game-play and to combine this with the real-world circumstances of the player, and to target the person with content, such as advertising, special offers or news stories, based on this.

### Object of the Invention

It is an object of a preferred embodiment of the invention to provide a means of effectively monitoring gamer in-game and real-life predilections for the purpose of sending them targeted content. While this is an object of preferred embodiments, it should be understood that the object of the invention per se is simply to provide a useful choice.

### Definitions

The term "comprises" or "has", if and when used in this document in relation to a combination of features (e.g. steps), should not be seen as excluding the option of the combination being supplemented with additional unspecified features. The same applies to derivative terms such as "comprising" and "having".

The term "gameplay" as used herein, means actually playing a computerised game and is distinguishable from, for example, steps that may occur to get the game ready for play, for example registering one's details and preferences. Gameplay occurs, for example, when a gamer has engaged in competitive, goal attaining or point scoring sequences of the game.

### Summary of the Invention

According to one aspect of the invention there is a computer implemented method of collecting and processing electronic information concerning a human game player, comprising the steps of:
a) electronically monitoring a human game player's activity in the course of computerised gameplay to determine game preferences of the player;
b) generating electronic data indicative of the game preferences (game data); and
c) computer processing the game data to determine what messages to target at the player (targeted messages) in gameplay and/or in real life commensurate with their game preferences (and preferably sending such messages to the player).

Optionally the method comprises:
a) electronically monitoring the player's activity in their real life by way of a mobile communications device used by the player, to determine real-life preferences of the player;
b) generating electronic data indicative of the real-life preferences (real-life data);
c) computer processing the real-life data to determine what messages to target at the player in gameplay and/or in their real-life, commensurate with their real-life preferences.

Optionally, the use of game data or real-life data is combined with third-party data about the player (third-party data) to determine what messages to target at the player in gameplay or in real-life, commensurate with the players real-life and/or gameplay preferences.

Optionally, the third-party data is data concerning the player's digital currency and financial transaction activity. This could include credit card, cryptocurrency or other virtual currency transactions.

Optionally the first step a) mentioned above comprises determining that a virtual good or service has been purchased by the player in gameplay, and the corresponding step c) comprises presenting the player with (e.g. sending) an advertisement (e.g. an offer) to purchase a real-life counterpart of the good or service.

Optionally the second step a) mentioned above comprises monitoring a real good or service purchase transaction by the player, and the corresponding step c) comprises presenting the player with (e.g. sending) with an advertisement (e.g. an offer) to purchase a virtual counterpart of the real good or service.

Optionally in each case the advertisement is sent via one or more social media account used by the player.

Optionally in each case the advertisement is sent via electronic messaging methods.

Optionally, the targeted message is a personalised digital token to purchase a virtual good or service or a prompt to connect with another game player.

Optionally the method comprises maintaining a data account for the player which records purchasing preference information for the player based on their selections of virtual goods and/or services during gameplay.

Optionally the data account records purchasing preference information for the player based on their purchases of real-life (i.e. outside of game-play) goods and/or services.

Optionally the human game player controls an avatar in the course of gameplay and the player's preferences are determined, at least in part, based on choices made by the player for the avatar during gameplay.

Optionally the method operates in substantially the same way for multiple human game players, simultaneously.

Optionally, there is a further aspect of the invention, comprising:
a) electronically monitoring the player's activity in their real life by way of a mobile communications device used by the player, to determine real-life preferences of the player;
b) generating electronic data indicative of the real-life preferences (real-life data);
c) computer processing the real-life data to determine what messages to target at the player to encourage them to make purchases in gameplay, and/or in their real-life, commensurate with their real-life preferences;
d) determining that a virtual good or service has been purchased by the player in gameplay and presenting the player with an advertisement (e.g. an offer) to purchase a real-life counterpart of the good or service;
e) monitoring a real good or service purchase transaction by the player and presenting the player with an advertisement to purchase a virtual counterpart of the real good or service;
f) in each case sending the advertisement via one or more social media account used by the player;
g) maintaining a data account for the player which records purchasing preference information for the player based on their selections of virtual goods and/or services during gameplay;
h) recording in the data account purchasing preference information for the player based on their purchases of real-life (i.e. outside of game-play) goods and/or services;
i) the human game player controlling an avatar in the course of gameplay and the player's preferences being determined, at least in part, based on choices made by the player for the avatar during gameplay; and
j) operating the method in substantially the same way for multiple human game players, simultaneously.

Optionally, at least some of the players with an offer, comprising a personalised digital token, for them to purchase a good or service commensurate with their game preferences.

### Detailed Description

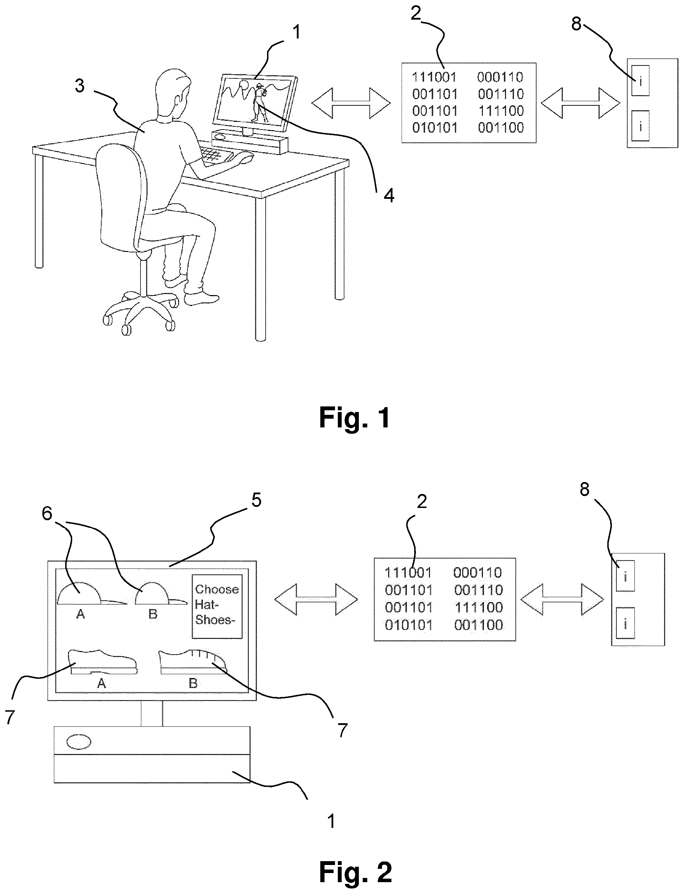

Referring to **Figure 1**, the invention comprises a software driven computer implemented method that monitors player activity in the course of computerised gameplay. The game may be run via a local area network (LAN) or via a wide area network (WAN). Preferably the game runs via the Internet and involves a multiplicity of players playing from different geographical locations, interacting with one another. Preferably the game is hosted by a remote server.

The game is played on a computerised device 1, for example a smart phone, tablet, desktop or laptop. The device 1 engages with software 2 that causes the activity or behaviours of a human player 3 to be monitored, for example when they are given, in the course of gameplay, a decision to make. For example, the player may be confronted with the opportunity to select, in the course of gameplay, virtual clothing for a character, for example an avatar 4, that they control in the game to wear. This is illustrated in **Figure 2** where the player is presented on-screen 5 with a selection of several hats 6 and several pairs of shoes 7, each corresponding to a different real-world design and/or displaying real world branding. The player is prompted to click to choose a virtual one of these hats and shoes for their avatar to wear in gameplay. The software runs to cause the human player's choice to be monitored and, in a data sense, allocates it to an electronic `player preferences' account 8 for the person concerned. The account 8 may comprise a digital record held on a remote server run by a game host and which also substantially controls gameplay.

The algorithm continues to run as above for other choices the human player makes when they decide, during gameplay, what other goods or services their avatar will use. In this way the player's account becomes more developed with data indicative of their preferences and predilections for goods and services in the real world. Further examples include what foods or beverages are selected during gameplay for the avatar to consume, virtually, what geographical places the player chooses during gameplay for their avatar to appear in, what sort of background music the player selects during gameplay and what colours or colour pallets they favour, etc.

This cyber monitoring of in-game player activity or behaviour may also involve profiling the player based on other decisions made during gameplay. For example, based on how they interact with game options and/or other players, it may be determined what personality they have, e.g. whether they are adventurous, conservative, introverted, extroverted, sociable, an outdoors (nature loving) or in-doors person, susceptible to peer pressure or to following majority social norms, etc. in real-life. This information may be stored in the preferences account and used for determining what advertisements to send to the person.

Based on the contents of the player's preferences account 8, they are sent targeted messages which may include electronic advertisements for other real world goods and/or services corresponding to the virtual counterparts chosen in gameplay, special offers, informational content or prompts to connect with other players. For example, if during gameplay a player had their avatar enter a virtual bar and order a particular brand of virtual whiskey, then the player would receive a targeted message if they were near a store that sold that same brand of whisky. The targeted messages are preferably sent to the player's social media accounts but may, if desired, be communicated by email or another electronic messaging or chat method, a physical mailed message or as a pop-up during gameplay.

The method preferably gathers information in the same manner for multiple game players, creates a user preference account for each, and sends them targeted advertisements in the same way.

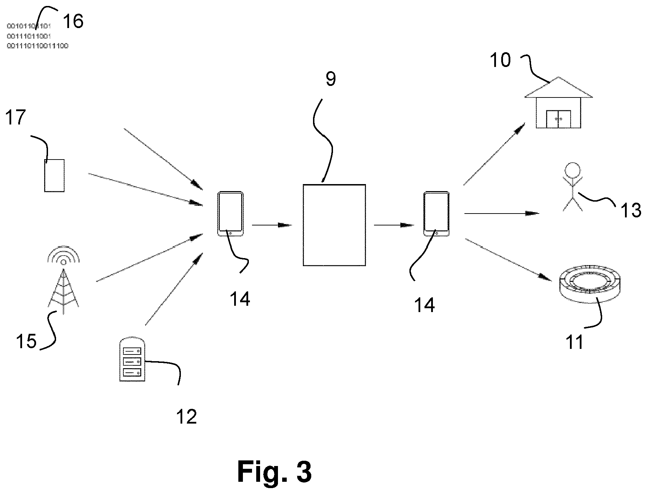

Referring to **Figure 3**, preferably the method also involves monitoring players via centralised internet enabled computerised hardware 9 in their real-life (non-game) activities, for example what geographical locations or establishments they tend to visit or pass (e.g. retail stores 10), including what events and experiences the player `checks in' to (e.g. stadium hosted sports or music events 11), what hobbies they have, what games (e.g. favoured game servers 12) or sports they like, what sort of shows, movies or music they listen to or watch, what events they attend or plan to attend, how they represent or otherwise personify themselves, and what people or groups (e.g. friends 13) they interact with, spatial data such as what the weather is like in the player's location or the location of the player when the player logs into the game, temporal data such as the location of the player (e.g. as determined from their smart phone 14 via networks of phone towers 15 and GPS data 16) and physiological data such as how many steps they take, purchasing practices (e.g. monitored via their credit card 17 transactions), etc. This sort of information may be obtained by harvesting demographic (e.g. sex, age, residence, profession) and interest data from their social media accounts, including information from 'follows', 'likes' and other online data, tracking the geographical locations the person frequents (e.g. their spatial behaviour) using GPS activated phones or other portable communications devices, what Wi-Fi facilities they use and by monitoring social media activity, 'follows', 'likes', purchases of goods and services and electronic 'check-in' information of the player. It may for example be determined that the person is more likely to make a purchase on 'such and such' day, at a particular time of day. By combining a person's gameplay behaviour with their real-life behaviour, it is possible to develop a more complete data profile of their predilections for estimating what sort of targeted messages they will be receptive to, and then sending such messages to them via phone, social media accounts, email, electronic message or chat forums, paper mail or any other means.

The method also involves combining the data from the player's real-life and digital applications with third party data such as data from brand partnerships, blockchain explorers and other sources. For example, the method may record transaction preference information based on the player's cryptocurrency wallet activity as recorded on the blockchain.

By way of example, it may be determined by monitoring the real world behaviour of a player that they pass by a baseball cap store 'X' on their way home from work each day, at about 4:45 pm. It may also be determined by monitoring the person's in-game behaviour that they purchased a baseball cap branded 'Y' for their game avatar earlier the same week. Based on the GPS facility in the person's phone, it is detected when they are near the store on their way home, and at that time they are sent a text or other electronic message to the affect that the store has the same real-world cap available for purchase for a discounted price. The message may contain a personalised digital token that only that player gets, entitling them to a particular or discounted price or a reward. In this way the person is targeted in a specific manner without the retailer having to change the label price for the item in-store.

In some embodiments of the invention, player preference accounts are computer processed to not only determine what real-life goods and services they may already have an affinity for, but also to encourage new preferences for certain goods or services and then target the player with corresponding advertisements. For example, if a player's preference account indicates that they like a particular brand of golf club irons, then they may be sent advertisements, not just for golf clubs, but also holidays to golfing resorts. Because the player already has an interest in golf it is more likely they will respond favourably to such offers. If they engage with these advertisements in their social media accounts then they may be sent further advertisements for flights to the destinations of the resorts.

The software 2 that drives the method may be installed in part on the computerised device 1 owned by the player, and in part on a remote device owned by an online game provider company. For example, the player's phone or computer may have a software component that runs the game and communicates with a game company server that runs data analysing software. In this regard software on the player's device may communicate the player's choices to the game company server, which in turn creates and monitors the player preference account and determines what sort of advertisements should be sent to the player. Based on each player's preferences, the server may direct the software running on the player's own device to present tailored new, or further, options for goods and services during gameplay.

In some embodiments of the invention the advertisements are sent to players by a social media platform operator, but that operator is directed or otherwise influenced as to what advertisements to send by processing data from the player preferences accounts.

In preferred embodiments of the invention the game players may record demographic and/or preference details with a game host server before entering game play. These details may be used in combination with gameplay determined predilections for determining, overall, what advertisements or other messages to send gamers in the same way described above.

While some preferred embodiments of the invention have been described by way of example it should be appreciated that modifications and improvements can occur without departing from the scope of the following claims.

In terms of disclosure, this document hereby discloses each item, feature or step mentioned herein in combination with one or more of any of the other item, feature or step disclosed herein, in each case regardless of whether such combination is claimed.

## Claims

1. A computer implemented method of collecting and processing electronic information concerning a human game player, comprising the steps of:
a) electronically monitoring a human game player's activity in the course of computerised gameplay to determine game preferences of the player;
b) generating electronic data indicative of the game preferences, or game data; and
c) computer processing the game data to determine what messages to target at the player in gameplay, and/or in their real-life, commensurate with their game preferences.

2. A method according to claim 1, comprising:
a) electronically monitoring the player's activity in their real life by way of a mobile communications device used by the player, to determine real-life preferences of the player;
b) generating electronic data indicative of the real-life preferences, or real-life data; and
c) computer processing the real-life data to determine what messages to target at the player in gameplay, and/or in their real-life, commensurate with their real-life preferences.

3. A method according to claim 1 or 2, comprising the use of game data or real-life data combined with third-party data about the player, or third-party data, to determine what messages to target at the player in gameplay and/or in real-life, commensurate with the players real-life or gameplay preferences.

4. A method according to claim 3, where the third-party data is data concerning the player's digital currency and financial transaction activity.

5. A method according to claim 1 or 2, wherein step a) of claim 1 comprises determining that a virtual good or service has been purchased by the player in gameplay, and step c) of claim 1 comprises presenting the player with an advertisement to purchase a real-life counterpart of the good or service.

6. A method according to claim 2, or claim 5 when read on claim 2, wherein step a) of claim 2 comprises monitoring a real good or service purchase transaction by the player, and step c) of claim 2 comprises presenting the player with an advertisement to purchase a virtual counterpart of the real good or service.

7. A method according to claim 5 or 6, wherein in each case the advertisement is sent via one or more social media account used by the player or the advertisement is sent via one or more electronic messaging method.

8. A method accordingly to claim 6, wherein the targeted message comprises a personalised digital token to purchase a virtual good or service.

9. A method according to claim 1, 2 or 3, wherein the targeted message comprises a connection to another game player in real life or in gameplay.

10. A method according to any one of the preceding claims, comprising maintaining a data account for the player mentioned in claim 1, which records purchasing preference information for said player based on their selections of virtual goods and/or services during gameplay.

11. A method according to claim 10, wherein the data account records purchasing preference information for the player mentioned in claim 1 based on their purchases of real-life goods and/or services.

12. A method according to any one of the preceding claims, wherein the human game player mentioned in claim 1 controls an avatar in the course of gameplay and said player's preferences are determined, at least in part, based on choices made by that player for the avatar during gameplay.

13. A method according to any one of the preceding claims, wherein the method operates in substantially the same way for multiple human game players, simultaneously.

14. A method according to claim 1, comprising:
a) electronically monitoring the player's activity in their real life by way of a mobile communications device used by the player, to determine real-life preferences of the player;
b) generating electronic data indicative of the real-life preferences, or real-life data;
c) computer processing the real-life data to determine what messages to target at the player to encourage them to make purchases in gameplay, and/or in their real-life, commensurate with their real-life preferences;
d) determining that a virtual good or service has been purchased by the player in gameplay and presenting the player with an advertisement to purchase a real-life counterpart of the good or service;
e) monitoring a real good or service purchase transaction by the player and presenting the player with an advertisement to purchase a virtual counterpart of the real good or service;
f) in each case sending the advertisement via one or more social media account used by the player;
g) maintaining a data account for the player which records purchasing preference information for the player based on their selections of virtual goods and/or services during gameplay;
h) recording in the data account purchasing preference information for the player based on their purchases of real-life goods and/or services;
i) the human game player controlling an avatar in the course of gameplay and the player's preferences being determined, at least in part, based on choices made by the player for the avatar during gameplay; and
j) operating the method in substantially the same way for multiple human game players, simultaneously.

15. A method according to claim 14, comprising presenting each of at least some of the players with an offer, comprising a personalised digital token, for them to purchase a good or service commensurate with their game preferences.
